# FASCICULE DE BREVET EUROPEEN

(11) **EP 2 815 809 B1**
(45) Date de publication et mention de la délivrance du brevet: **17.07.2019**
(21) Numéro de dépôt: 14305695.0
(22) Date de dépôt: 13.05.2014
(51) Int. Cl.: B01J 8/00, B01D 53/26

(54) **Dispositif de chargement de solides déliquescents pour un dispositif de séchage d'un fluide sous forme liquide ou gazeuse et méthode pour utiliser un tel dispositif de chargement.**
Ladevorrichtung für leicht zerfließende Feststoffe für eine Trockenvorrichtung eines Fluids in flüssigem oder gasförmigem Zustand, und Methode für die Verwendung einer solchen Ladevorrichtung
Device for loading deliquescent solids for a drying device of a fluid in liquid or gaseous form and method for using such a loading device

(30) Priorité: 17.06.2013 FR 1355628
(43) Date de publication de la demande: 24.12.2014
(73) Titulaire: AXENS, 92508 Rueil-Malmaison Cedex (FR)
(72) Inventeur: GIROD, Rémi, 75015 PARIS (FR)
(74) Mandataire: IFP Energies nouvelles

(56) Documents cités:
- FR-A- 1 256 519
- US-A- 2 854 155
- US-A- 3 589 105
- US-A1- 2006 189 783
- US-A1- 2009 162 149

## Description

La présente invention se rapporte à un dispositif de chargement de solides déliquescents dans un dispositif de séchage d'un fluide sous forme liquide ou gazeuse.

Elle concerne plus particulièrement le séchage d'hydrocarbures liquides, comme les essences, le gasoil ou le kérosène ainsi que le séchage d'hydrocarbures gazeux, tel que le GPL (Gaz de Pétrole Liquéfié).

Un tel dispositif de séchage comprend généralement une enceinte fermée remplie partiellement de solides déliquescents consommables portés par un support, comme une grille, des billes inertes ou tous autres moyens connus. Ce support est généralement disposé à distance du fond de l'enceinte et permet de répartir les solides déliquescents sur la section de l'enceinte en formant un lit dont la partie supérieure est préférentiellement à distance du sommet de l'enceinte.

Ce dispositif comprend également une entrée du fluide à traiter sous forme liquide ou gazeuse et une sortie de fluide traité également sous forme liquide ou gazeuse.

Pour réaliser le processus de séchage du fluide, qui peut se produire avec une température et une pression différentes des conditions atmosphériques, ce fluide est amené à traverser le lit de solides déliquescents. Durant cette traversée, une partie de ces solides se transforme en liquide après avoir absorber l'eau contenue dans le fluide. Ce liquide d'absorption traverse par gravité le support pour tomber dans le fond de l'enceinte et être ensuite évacué vers tous et par tous moyens connus.

Pendant cette opération de séchage, le niveau du lit de solides déliquescents baisse pendant le fonctionnement et, au delà d'une certaine baisse de niveau, il est nécessaire de la compenser par l'ajout de nouveaux solides déliquescents de manière à ce que le dispositif reste opérationnel.

Il est connu, notamment par les documents US 3 653 181 et US 3 589 105, des dispositifs de séchage qui comprennent une enceinte fermée avec un orifice de remplissage qui est situé en partie haute de cette enceinte. Cet orifice sert à introduire une nouvelle charge de solides déliquescents pour compenser la baisse de niveau de solides.

Ceci a pour inconvénient majeur de ne pouvoir réaliser les opérations de remplissage qu'après avoir arrêté le dispositif de séchage du fluide et cela compte tenu de la pression et de la température régnant à l'intérieur de l'enceinte.

De plus, dans l'éventualité où un arrêt de l'opération de séchage ne peut être envisagé, il est alors indispensable de disposer de plusieurs dispositifs de séchage en parallèle qui sont permutés pour éviter un tel arrêt.

La présente invention se propose de remédier aux inconvénients précités en utilisant un dispositif de séchage d'un fluide qui permet le chargement de solide alors qu'il est en fonctionnement et cela avec un coût réduit et une grande facilité d'emploi.

A cet effet, la présente invention concerne un dispositif de chargement de solides déliquescents selon la revendication 1.

Le moyen de vannage peut être une vanne d'isolation à boisseau sphérique et à passage intégral.

La conduite présente une inclinaison d'un angle compris entre 25° et 80° par rapport à l'horizontale, et de manière plus préférée d'un angle compris entre 45° et 70° et de manière très préférée d'un angle compris entre 40° et 60°.

La canalisation de circulation peut porter un entraînement mécanique pour les solides.

La canalisation de circulation peut porter une vis sans fin actionnée par un dispositif de mise en rotation.

La canalisation de circulation peut porter un moyen de purge.

L'invention concerne également une méthode de chargement de solides déliquescents selon la revendication 8.

La méthode peut consister à approvisionner le dispositif de chargement en solides déliquescents après l'isolation avec l'enceinte.

La méthode peut consister à réaliser une purge du dispositif de chargement après son isolation avec l'enceinte

La méthode peut consister à mettre à la pression atmosphérique le dispositif de chargement pour faire évacuer par gravité au travers d'un moyen de purge le fluide résiduel qui y est contenu.

La méthode peut consister à introduire un gaz neutre sous pression dans le dispositif de chargement pour faire évacuer au travers d'un moyen de purge le fluide résiduel qui y est contenu.

La méthode peut consister à introduire de l'azote sous pression dans le dispositif de chargement.

Le dispositif de chargement peut être un dispositif démontable de l'enceinte.

Le dispositif de chargement peut être utilisable sur d'autres enceintes.

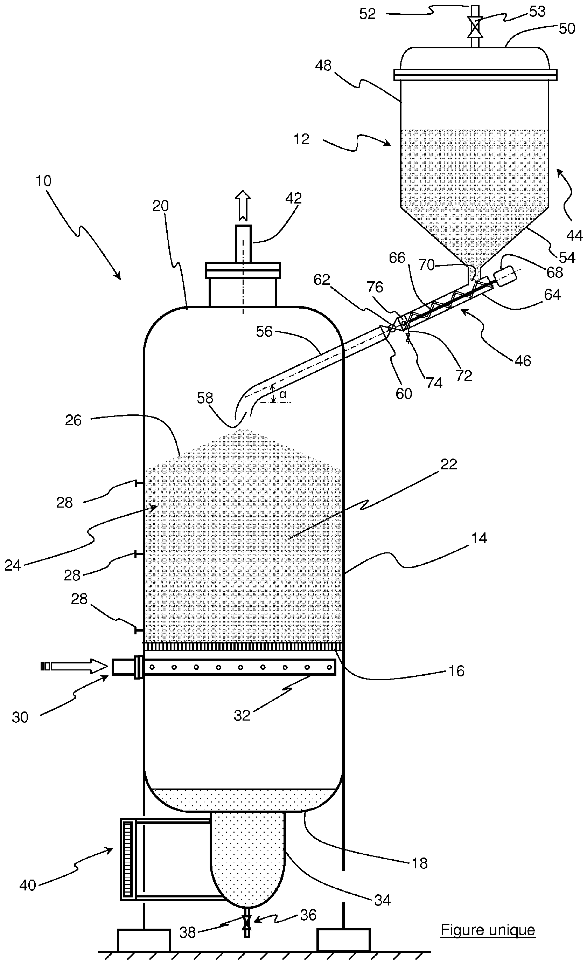

Les autres caractéristiques et avantages de l'invention vont apparaître maintenant à la lecture de la description qui va suivre, donnée à titre uniquement illustratif et non limitatif, et à laquelle est annexée la figure unique qui est une vue schématique d'un dispositif de séchage d'un fluide avec un dispositif de chargement selon l'invention.

La figure unique illustre un exemple de réalisation d'un dispositif de séchage de fluide 10 associé à un dispositif de chargement de solides déliquescents 12.

Le dispositif de séchage comprend une enceinte verticale fermée 14 à l'intérieur de laquelle est placé un support horizontal 16, comme un tamis ou une grille, qui s'étend sur toute la section transversale de l'enceinte en étant logé à distance du fond 18 et du sommet 20 de cette enceinte. Ce support reçoit une quantité déterminée de solides déliquescents consommables 22 qui sont répartis sur la section de l'enceinte de façon à former un lit 24 dont la partie supérieure 26 est à distance du sommet 20.

Le niveau du lit est vérifié par tous moyens de prise de niveau 28, comme un capteur de niveau à pale ou bilame. Avantageusement, le niveau du lit est surveillé par trois capteurs de niveau, un premier capteur à proximité du support 16 pour signaler un niveau bas de solides, un autre capteur au voisinage de la partie supérieure du lit témoignant du remplissage adéquate de l'enceinte par les solides et un dernier entre les deux capteurs pour indiquer un niveau moyen de présence de solides.

Les solides utilisés peuvent être de tous types et ceux notamment décrit dans les brevets US 3 246 453 ou US 3 303 621 ou FR 2 963 018.

A titre d'exemple, ces solides déliquescent peuvent être des sels ou des pastilles et la composition de ces solides peut être à base de chlorure de sodium, chlorure de potassium, ou de chlorure calcium ou de soude ou de potasse ou de leur mélange.

Avantageusement, ces solides peuvent être réalisés à partir de poudre compactée et sont conformés sous la forme de cylindres, billes, dragées, coussinets, pastilles, perles, etc.

De manière préférentielle, ces solides peuvent avoir une taille comprise entre 1 et 4 centimètres.

L'avantage d'une telle mise en forme et d'une telle taille de solides est de favoriser la réorganisation automatique du lit au fur et à mesure de sa transformation en liquide, ce qui permet d'éviter la formation de passages préférentiels dans le lit de solides. De plus, cela permet de bien maitriser la consommation de solides et, en conséquence, de pouvoir planifier les opérations de rechargement de solides. La taille du solide est optimisée de manière à favoriser un contact maximal avec le fluide à traiter et à éviter que ce solide puisse traverser le support.

La suite de la description se rapporte, uniquement à titre d'exemple, à un dispositif de séchage avec la circulation du fluide à traiter du bas de l'enceinte vers le haut de cette enceinte afin de ne pas entraîner le liquide formé lors de la déliquescence du solide en présence d'eau.

Ainsi, une entrée 30 de fluide à traiter permet d'introduire ce fluide dans l'enceinte entre le support 16 et le fond 18 de cette enceinte.

De manière préférentielle, cette entrée est connectée à un moyen de distribution 32, comme un distributeur, qui permet de distribuer le fluide tout au long de la section de l'enceinte.

Ce fluide à traiter est un fluide qui contient une certaine quantité d'eau et qui peut être sous forme liquide (essences, gasoil, kérosène,...) ou sous forme gazeuse, comme le GPL.

Le fond de l'enceinte comprend également une réserve de liquide 34 qui permet de récupérer le liquide d'absorption provenant de la déliquescence du lit 24 de solides.

Cette réserve est munie d'un moyen de vidange 36 manuel ou automatique du liquide contenu dans cette réserve, comme une vanne de vidange 38. Pour la vidange manuelle, le niveau du liquide d'absorption est contrôlé au travers d'un indicateur de niveau 40 par un opérateur qui actionne la vanne 38 pour vider le liquide contenu dans cette réserve dés que le niveau atteint un seuil déterminé. En ce qui concerne la vidange automatique, la réserve comprend un dispositif automatique de purge avec un automate qui commandera l'ouverture de la vanne 38 dés que le niveau de liquide atteint le seuil déterminé.

Enfin, l'enceinte est munie à son sommet d'un conduit d'évacuation 42 du fluide traité, c'est à dire du fluide débarrassé de son eau.

A ce dispositif de séchage d'un fluide est associé un dispositif de chargement 12 de solides déliquescents.

Ce dispositif de chargement a pour avantage de permettre un chargement des solides dans l'enceinte 14 alors que cette enceinte reste en fonctionnement. Cela permet d'éviter l'arrêt du dispositif de séchage pour son rechargement en solides ou d'installer une pluralité d'enceintes en parallèle qui seraient permutées pour éviter un arrêt complet.

Ce dispositif de chargement comprend un sas 44 contenant des solides déliquescents et un dispositif d'entraînement 46 des solides à partir du sas vers l'intérieur de l'enceinte.

Le sas comprend un réceptacle 48 fermé en partie haute par un couvercle 50 muni d'un évent 52 contrôlé par une vanne 53 et comportant en partie basse un cône d'alimentation 54.

Le dispositif d'entraînement 46 comprend, de manière avantageuse, un entraînement mécanique et préférentiellement par vis sans fin, par vibration, par godets, par piston ou par entraînement par un débit de fluide.

Dans la description qui va suivre à titre d'exemple, il sera fait mention d'un entraînement mécanique par vis sans fin qui a pour avantage d'éviter une agglomération des solides et de pouvoir facilement éliminer une agglomération au cas où elle se produirait dans certaines parties du dispositif.

Le dispositif d'entraînement comprend une conduite d'introduction inclinée 56 qui traverse à étanchéité la paroi périphérique de l'enceinte 14 pour y introduire des solides. Cette conduite débouche, par l'une de ses extrémités 58, dans la zone située entre le sommet 20 de cette enceinte et la partie supérieure 26 du lit 24, et est munie à l'autre de ces extrémités 60, qui est située en dehors de l'enceinte, d'une vanne d'isolation 62, de préférence à boisseau sphérique et à passage intégral.

L'inclinaison α de la conduite 56 est d'un angle compris de préférence entre 25° et 80° par rapport à l'horizontale, et de manière plus préférée d'un angle compris entre 45° et 70° et de manière très préférée d'un angle compris entre 40° et 60°.

Cette conduite est raccordée au niveau de la vanne d'isolation 62 à une canalisation de circulation 64 fermée à son extrémité opposée à celle du raccordement avec la vanne 62. Cette canalisation loge une vis sans fin 66 actionnée par un dispositif de mise en rotation 68, par exemple de type motorisé avec un moteur électrique ou tout autre moyen connu. Cette canalisation comprend également un orifice d'admission radial 70, qui est en communication avec le cône d'alimentation 54 du sas, et un moyen de purge 72, comme un drain, avantageusement situé en partie basse de la canalisation et contrôlé par un vanne 74.

Comme mieux visible sur la figure, cette canalisation a avantageusement la même inclinaison que la conduite de façon à faciliter l'écoulement des solides vers l'enceinte.

En fonctionnement, la vanne d'isolation 62 est en position de fermeture de façon à interdire la communication entre la conduite 56 et la canalisation 64 dans laquelle la vis sans fin est en position d'arrêt, et le drain 72 est fermé.

Le fluide à traiter est admis dans l'enceinte et arrive au distributeur de diffusion 32. Ce fluide traverse, dans un mouvement ascendant, le support 16 puis le lit 24 de solides déliquescents. Durant cette traversée, l'humidité contenue dans ce fluide est absorbée par les solides qui se liquéfient partiellement. Le liquide ainsi formé se sépare du lit de solides et tombe vers le fond 18 de l'enceinte. Le fluide dépourvu de son eau arrive dans la zone entre la partie supérieure du lit et le sommet de l'enceinte pour être ensuite évacué au travers du conduit d'évacuation 42 vers tous moyens connus de réception de fluide traité.

Durant ce fonctionnement, le niveau de solides déliquescents du lit est amené à baisser du fait de la consommation de solides. Ce niveau est surveillé en conséquence par les capteurs 28 et, dès que ce niveau atteint un seuil déterminé, une opération de remplissage de l'enceinte par des solides déliquescents est alors entreprise sans pour cela arrêter le séchage du fluide à l'intérieur de l'enceinte.

Au préalable, le sas 44, qui est à pression et à température ambiante, est chargé d'une quantité prédéterminée de solides déliquescents consommables. Ce chargement est effectué par la partie haute du réceptacle 48 après avoir démonté le couvercle 50.

Une fois ces opérations de chargement effectuées et après fermeture par le couvercle, la vanne d'isolation 62 est légèrement ouverte alors que l'évent 52, avec sa vanne 53 en position ouverte, permet de chasser le fluide gazeux présent lors du chargement jusqu'à ce que le dispositif de chargement 12 soit rempli de fluide traité en provenance de l'enceinte 14. Dans le cas de fluides non compatibles avec l'air atmosphérique, une étape de rinçage avec un gaz inerte ou compatible est nécessaire entre le drain 72 et l'évent 52.

Par cela, la conduite 56, la canalisation 64 et l'intérieur du sas 44 sont à pression et/ou à température identique(s) à celle(s) qui règne(nt) à l'intérieur de l'enceinte.

La vis sans fin 66 est alors mise en mouvement par le moteur 68 et les solides déliquescents contenus dans le sas 44 sont extraits de ce sas pour être introduits dans la canalisation 64. Sous l'effet du mouvement de la vis et de la gravité, ces solides circulent dans cette canalisation pour être amenés dans la conduite 56 et sortir par l'extrémité 58 de cette conduite pour aboutir dans le lit 24 en compensant la baisse de niveau.

Dés que le sas est vidé de ses solides, contrôlé par un indicateur de niveau visuel 76 ou tous autres moyens connus, la vanne d'isolation 62 est placée en position de fermeture de manière à interdire la communication entre la conduite 56 et la canalisation 64 et la vis sans fin 66 est arrêtée.

Grâce à ce dispositif, le chargement de solides pour compenser la baisse de niveau a pu être réalisé sans arrêter le dispositif de séchage ou sans perturber son processus.

L'évent 52 est alors ouvert par la vanne 53 pour mettre à la pression atmosphérique l'intérieur du sas 44 ainsi que la canalisation 64 et une opération de purge est alors effectuée.

En effet, pendant l'opération de chargement de solides, une partie du fluide traité qui est présent dans la zone entre la partie supérieure du lit et le sommet de l'enceinte a pénétré dans la conduite 56, la canalisation 66 et le sas 44. Après la fermeture de la vanne d'isolation 62, il subsiste donc dans la canalisation et le sas du fluide traité qu'il faut évacuer avant de réaliser un nouveau chargement du sas par des solides.

A titre d'exemple, dans le cas où le fluide est sous forme liquide, cette purge peut être réalisée en maintenant la vanne d'isolation 62 en position de fermeture et en ouvrant le drain 72 par l'intermédiaire de la vanne 74 de manière à ce que le liquide contenu dans le sas et dans la canalisation s'écoule sous l'effet de la gravité par ce drain.

Une autre façon de réaliser cette purge consisterait à maintenir fermée la vanne d'isolation, à ouvrir le drain 72 et à connecter l'évent 52 du sas 44 à une source de gaz inerte sous pression, comme de l'azote qui est un gaz préférentiellement utilisé pour tous les fluides présentant un risque d'explosion ou d'émanation toxique.

Bien entendu, d'autres gaz inertes, comme le dioxyde de carbone ou l'argon, peuvent être utilisés.

Après ouverture de la vanne de l'évent et sous l'effet de ce gaz sous pression, le liquide contenu dans le sas et la canalisation est repoussé vers l'extérieur en passant par le drain 72.

Dés que la présence de gaz inerte est détecté au niveau de la vanne 62, l'évent 52 est fermé et déconnecté de la source de gaz inerte puis le drain est fermé.

Après cette opération de purge, le sas qui est à pression et à température ambiante peut être à nouveau chargé d'une quantité prédéterminée de solides déliquescents consommables pour une future opération de chargement de l'enceinte.

Avantageusement, le dispositif de chargement 12 peut être amovible sans perturber le dispositif de séchage et être utilisée pour le chargement en solide de plusieurs enceintes.

A cet effet, la liaison au niveau de la vanne d'isolation 62 entre la canalisation 64 et cette vanne d'isolation est une liaison démontable, comme par une liaison par bride ou tout autre moyen connu.

Après désolidarisation de la canalisation 64 de la vanne 62, la conduite 56 munie de la vanne 62 reste sur l'enceinte et l'ensemble formé par le sas et la canalisation peut être déplacé pour être utilisé avec une autre enceinte qui sera munie d'une conduite et d'une vanne d'isolation.

## Revendications

1. Dispositif de chargement de solides déliquescents pour un dispositif de séchage d'un fluide sous forme liquide ou gazeuse, ledit dispositif de séchage comprenant une enceinte (14) à température et pression différentes des conditions atmosphériques, un lit (24) de solides déliquescents, une entrée (30) pour un fluide à traiter et une sortie (42) du fluide traité, ledit dispositif comprenant un sas (44) contenant des solides déliquescents, un dispositif d'entraînement (46) des solides à partir du sas (44) vers l'intérieur de l'enceinte (14) et un moyen de vannage (62) placé sur le dispositif d'entraînement, **caractérisé en ce que** le dispositif d'entraînement (46) comprend une conduite d'introduction (56) de solides dans l'enceinte (14), ladite conduite (56) présentant une inclinaison (α) d'un angle compris entre 25° et 80° par rapport à l'horizontale, et de manière plus préférée d'un angle compris entre 45° et 70° et de manière très préférée d'un angle compris entre 40° et 60°, une canalisation de circulation (64) de solides vers la conduite et **en ce que** le moyen de vannage (62) est placé entre la conduite et la canalisation, et **en ce que** le sas (44) porte un évent (52) contrôlé par une vanne (53).

2. Dispositif de chargement selon la revendication 1, **caractérisé en ce que** le moyen de vannage (62) est une vanne d'isolation à boisseau sphérique et à passage intégral.

3. Dispositif de chargement selon la revendication 1 ou 2, **caractérisé en ce que** la canalisation de circulation (64) porte un entraînement mécanique (66) pour les solides.

4. Dispositif de chargement selon l'une des revendications 1 à 3, **caractérisé en ce que** la canalisation de circulation porte une vis sans fin (66) actionnée par un dispositif de mise en rotation (68).

5. Dispositif de chargement selon l'une des revendications 1 à 4, **caractérisé en ce que** la canalisation de circulation (66) porte un moyen de purge (72).

6. Dispositif de chargement selon l'une des revendications 1 à 5, **caractérisé en ce que** le dispositif de chargement est un dispositif démontable de l'enceinte.

7. Dispositif de chargement selon l'une des revendications 1 à 5, **caractérisé en ce que** le dispositif de chargement est utilisable sur d'autres enceintes.

8. Méthode de chargement de solides déliquescents pour un dispositif de séchage d'un fluide sous forme liquide ou gazeuse, ledit dispositif de séchage comprenant une enceinte (14) à température et pression différentes des conditions atmosphériques, un lit (24) de solides déliquescents, une entrée (30) pour un fluide à traiter et une sortie (42) du fluide traité, ledit dispositif de séchage comprenant un dispositif de chargement des solides (12) déliquescents selon l'une des revendications précédentes, **caractérisée en ce que** la méthode consiste :
- à surveiller le niveau de solides dans le lit (24),
- en cas de niveau de solides inférieur à un seuil, à établir une communication entre l'enceinte (14) et le dispositif de chargement de solides (12) de manière à obtenir une pression et une température à l'intérieur du dispositif de chargement sensiblement identiques à celles qui règnent à l'intérieur de l'enceinte, par ouverture du moyen de vannage (62) et de la vanne (53) de contrôle de l'évent (52),
- à faire circuler les solides à partir du dispositif de chargement vers l'intérieur de l'enceinte jusqu'à ce que le niveau désiré de solides soit atteint,
- une fois le niveau atteint, à arrêter la circulation de solides et à isoler l'enceinte (14) du dispositif de chargement de solides.

9. Méthode de chargement de solides déliquescents selon la revendication 8, **caractérisée en ce qu'**elle consiste à approvisionner le dispositif de chargement en solides déliquescents après l'isolation avec l'enceinte.

10. Méthode de chargement de solides déliquescents selon la revendication 8 ou 9, **caractérisée en ce qu'**elle consiste à réaliser une purge du dispositif de chargement après son isolation avec l'enceinte.

11. Méthode de chargement de solides déliquescents selon la revendication 10, **caractérisée en ce qu'**elle consiste à mettre à la pression atmosphérique le dispositif de chargement pour faire évacuer par gravité au travers d'un moyen de purge (72) le fluide résiduel qui y est contenu.

12. Méthode de chargement de solides déliquescents selon la revendication 10, **caractérisée en ce qu'**elle consiste à introduire un gaz neutre sous pression dans le dispositif de chargement pour faire évacuer au travers d'un moyen de purge (72) le fluide résiduel qui y est contenu.

13. Méthode de chargement de solides déliquescents selon la revendication 12, **caractérisée en ce qu'**elle consiste à introduire de l'azote sous pression dans le dispositif de chargement.

## Patentansprüche

1. Ladevorrichtung von zerfließenden Feststoffen für eine Trocknungsvorrichtung eines Fluids in flüssiger oder gasförmiger Form, wobei die Trocknungsvorrichtung einen Raum (14) mit zu den atmosphärischen Bedingungen unterschiedlichen Temperaturen und Druck, ein Bett (24) von zerfließenden Feststoffen, einen Eingang (30) für ein zu behandelndes Fluid und einen Ausgang (42) des behandelten Fluids umfasst, wobei die Vorrichtung eine Schleuse (44), die zerfließende Feststoffe enthält, eine Antriebsvorrichtung (46) der Feststoffe von der Schleuse (44) zum Inneren des Raums (14) und ein Ventilmittel (62), das auf der Antriebsvorrichtung angeordnet ist, umfasst, **dadurch gekennzeichnet, dass** die Antriebsvorrichtung (46) eine Einführleitung (56) von Feststoffen in den Raum (14) umfasst, wobei die Leitung (56) eine Neigung (α) um einen Winkel zwischen 25° und 80° zur Horizontalen und vorzugsweise um einen Winkel zwischen 45° und 70° und besonders bevorzugt um einen Winkel zwischen 40° und 60° aufweist, einen Zirkulationskanal (64) von Feststoffen zu der Leitung umfasst, und dass das Ventilmittel (62) zwischen der Leitung und dem Kanal angeordnet ist, und das die Schleuse (44) eine Lüftungsöffnung (52) trägt, die durch ein Ventil (53) gesteuert ist.

2. Ladevorrichtung nach Anspruch 1, **dadurch gekennzeichnet, dass** das Ventilmittel (62) ein Kugelisolierventil mit Volldurchgang ist.

3. Ladevorrichtung nach Anspruch 1 oder 2, **dadurch gekennzeichnet, dass** der Zirkulationskanal (64) einen mechanischen Antrieb (66) für die Feststoffe trägt.

4. Ladevorrichtung nach einem der Ansprüche 1 bis 3, **dadurch gekennzeichnet, dass** der Zirkulationskanal eine Schnecke (66) trägt, die von einer Vorrichtung zum Versetzen in Drehung (68) betätigt wird.

5. Ladevorrichtung nach einem der Ansprüche 1 bis 4, **dadurch gekennzeichnet, dass** der Zirkulationskanal (66) ein Ablassmittel (72) trägt.

6. Ladevorrichtung nach einem der Ansprüche 1 bis 5, **dadurch gekennzeichnet, dass** die Ladevorrichtung eine vom Raum demontierbare Vorrichtung ist.

7. Ladevorrichtung nach einem der Ansprüche 1 bis 5, **dadurch gekennzeichnet, dass** die Ladevorrichtung an weiteren Räumen verwendbar ist.

8. Ladeverfahren von zerfließenden Feststoffen für eine Trocknungsvorrichtung eines Fluids in flüssiger oder gasförmiger Form, wobei die Trocknungsvorrichtung einen Raum (14) mit zu den atmosphärischen Bedingungen unterschiedlichen Temperaturen und Druck, ein Bett (24) von zerfließenden Feststoffen, einen Eingang (30) für ein zu behandelndes Fluid und einen Ausgang (42) des behandelten Fluids umfasst, wobei die Trocknungsvorrichtung eine Ladevorrichtung der zerfließende Feststoffe (12) nach einem der vorhergehenden Ansprüche umfasst, **dadurch gekennzeichnet, dass** das Verfahren darin besteht:
- das Niveau von Feststoffen im Bett (24) zu überwachen,
- im Falle eines Feststoffniveaus unter einem Grenzwert eine Kommunikation zwischen dem Raum (14) und der Feststoffladevorrichtung (12) herzustellen, um einen Druck und eine Temperatur innerhalb der Ladevorrichtung zu erhalten, die im Wesentlichen identisch mit jenen sind, die innerhalb des Raums herrschen, durch Öffnen des Ventilmittels (62) und des Steuerventils (53) der Lüftungsöffnung (52),
- die Feststoffe von der Ladevorrichtung in das Innere des Raums zirkulieren zu lassen, bis das gewünschte Feststoffniveau erreicht ist,
- wenn das Niveau erreicht ist, die Feststoffzirkulation anzuhalten und den Raum (14) von der Feststoffladevorrichtung zu isolieren.

9. Ladeverfahren von zerfließenden Feststoffen nach Anspruch 8, **dadurch gekennzeichnet, dass** es darin besteht, die Ladevorrichtung mit zerfließenden Feststoffen nach der Isolation zum Raum zu versorgen.

10. Ladeverfahren von zerfließenden Feststoffen nach Anspruch 8 oder 9, **dadurch gekennzeichnet, dass** es darin besteht, ein Auslassen der Ladevorrichtung nach ihrer Isolation zum Raum durchzuführen.

11. Ladeverfahren von zerfließenden Feststoffen nach Anspruch 10, **dadurch gekennzeichnet, dass** es darin besteht, die Ladevorrichtung unter Luftdruck zu setzen, um das Restfluid, das in ihr enthalten ist, durch Schwerkraft durch ein Ablassmittel (72) abzuleiten.

12. Ladeverfahren von zerfließenden Feststoffen nach Anspruch 10, **dadurch gekennzeichnet, dass** es darin besteht, ein Neutralgas unter Druck in die Ladevorrichtung einzuleiten, um das Restfluid, das in ihr enthalten ist, durch ein Ablassmittel (72) abzuleiten.

13. Ladeverfahren von zefließenden Feststoffen nach Anspruch 12, **dadurch gekennzeichnet, dass** es darin besteht, Stickstoff unter Druck in die Ladevorrichtung einzuleiten.

## Claims

1. A deliquescent solid feeding device for a device for drying a fluid in liquid or gas form, said drying device comprising an enclosure (14) with temperature and pressure conditions different from atmospheric, a deliquescent solid bed (24), an inlet (30) for a fluid to be treated and an outlet (42) for the treated fluid, said device comprising an air lock (44) containing deliquescent solids, a drive device (46) for driving the solids from air lock (44) to the inside of enclosure (14) and throttling means (62) arranged on the drive device, **characterized in that** drive device (46) comprises a pipe (56) for delivery of the solids into enclosure (14), said pipe (56) being inclined at an angle (α) ranging between 25° and 80° to the horizontal, more preferably at an angle ranging between 45° and 70°, and most preferably at an angle ranging between 40° and 60°, and a line (64) for circulation of the solids towards the pipe, **in that** throttling means (62) are arranged between the pipe and the line, and **in that** air lock (44) is provided with a vent (52) controlled by a valve (53).

2. A feeding device as claimed in claim 1, **characterized in that** throttling means (62) is a full-opening isolating ball valve.

3. A feeding device as claimed in claim 1 or 2, **characterized in that** circulation line (64) is provided with a mechanical drive (66) for the solids.

4. A feeding device as claimed in any one of claims 1 to 3, **characterized in that** the circulation line is provided with an endless screw (66) actuated by a rotating device (68).

5. A feeding device as claimed in any one of claims 1 to 4, **characterized in that** circulation line (64) is provided with a purge means (72).

6. A feeding device as claimed in any one of claims 1 to 5, **characterized in that** the feeding device is removable from the enclosure.

7. A feeding device as claimed in any one of claims 1 to 5, **characterized in that** the feeding device can be used on other enclosures.

8. A deliquescent solid feeding method for a device for drying a fluid in liquid or gas form, said drying device comprising an enclosure (14) with temperature and pressure conditions different from atmospheric, a deliquescent solid bed (24), an inlet (30) for a fluid to be treated and an outlet (42) for the treated fluid, said drying device comprising a deliquescent solid feeding device (12) as claimed in any one of the previous claims, **characterized in that** the method consists:
- in monitoring the solid level in bed (24),
- in case of a solid level below a threshold, in providing communication between enclosure (14) and solid feeding device (12) so as to obtain a pressure and a temperature in the feeding device substantially identical to those prevailing in the enclosure, by opening throttling means (62) and valve (53) controlling vent (52),
- in circulating the solids from the feeding device to the inside of the enclosure until the desired solid level is reached,
- once the level reached, in stopping the solid circulation and in isolating enclosure (14) from the solid feeding device.

9. A deliquescent solid feeding method as claimed in claim 8, **characterized in that** it consists in supplying the feeding device with deliquescent solids after isolating it from the enclosure.

10. A deliquescent solid feeding method as claimed in claim 8 or 9, **characterized in that** it consists in purging the feeding device after isolating it from the enclosure.

11. A deliquescent solid feeding method as claimed in claim 10, **characterized in that** it consists in putting the feeding device under atmospheric pressure so as to discharge through gravity, using a purge means (72), the residual fluid contained therein.

12. A deliquescent solid feeding method as claimed in claim 10, **characterized in that** it consists in introducing a neutral gas under pressure in the feeding device so as to discharge through a purge means (72) the residual fluid contained therein.

13. A deliquescent solid feeding method as claimed in claim 12, **characterized in that** it consists in introducing nitrogen under pressure in the feeding device.
